(19) Europäisches Patentamt
European Patent Office
Office européen des brevets

(11) Veröffentlichungsnummer: **0 219 489**
**B1**

# (12) EUROPÄISCHE PATENTSCHRIFT

(45) Veröffentlichungstag der Patentschrift: **03.01.90**

(51) Int. Cl.⁴: **G01F 1/42,** G01F 1/36

(21) Anmeldenummer: **86890279.2**

(22) Anmeldetag: **14.10.86**

## (54) Messblende für eine Messanordnung zur Durchflussmengenmessung von Fluidströmen sowie Messanordnung unter Verwendung dieser Messblende

(30) Priorität: **15.10.85 AT 2977/85**

(43) Veröffentlichungstag der Anmeldung: **22.04.87 Patentblatt 87/17**

(45) Bekanntmachung des Hinweises auf die Patenterteilung: **03.01.90 Patentblatt 90/1**

(84) Benannte Vertragsstaaten: **DE FR GB IT**

(56) Entgegenhaltungen:
**AT-B- 124 957**
**US-A- 3 469 446**

(73) Patentinhaber: **AVL Gesellschaft für Verbrennungskraftmaschinen und Messtechnik mbH.Prof.Dr.Dr.h.c. Hans List, Kleiststrasse 48, A-8020 Graz(AT)**

(72) Erfinder: **Jaschek, Alfred, Dr. Dipl.-Ing., Plüddemanngasse 91 A, A-8010 Graz(AT)**
Erfinder: **Fredericks, George E. Dipl.-Ing., Dr. Robert-Graf-Strasse 25, A-8020 Graz(AT)**

(74) Vertreter: **Collin, Hans, Dipl.-Ing. Dr. et al, Patentanwälte Dipl.-Ing. Dr. Hans Collin Dipl.-Ing. Erwin Buresch Dipl.-Ing. Dr. Helmut Wildhack Dipl.-Ing. Armin Häupl Mariahilfer Strasse 50, A-1070 Wien(AT)**

EP 0 219 489 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Meßanordnung zur Durchflußmengenmessung von Fluidströmen, insbesondere von bei Verbrennungskraftmaschinen auftretenden Gasströmen, wobei das Fluid durch zumindest eine in einem Rohr angeordnete Meßblende geführt ist, die eine ihre Durchflußöffnung begrenzende, radial nach innen gerichtete scharfe Kante aufweist, und wobei sowohl stromaufwärts als auch stromabwärts der Meßblende ein Druckfühler bzw. eine Druckmeßleitung eines Differenzdruckmeßgerätes bzw. Differenzdruckumformers angeordnet ist, dessen vom Differenzdruck abhängiges Ausgangssignal das Meßsignal für die die Meßblende durchströmende Fluidmenge bildet sowie ein Verfahren zum Nullpunktabgleich des Differenzdruckumformers in einer solchen Meßanordnung und eine Meßblende für eine Meßanordnung zur Durchflußmengenmessung von Fluidströmen, wobei das Fluid durch die in einem Rohr angeordnete Meßblende geführt ist und wobei die Meßblende eine ihre Durchflußöffnung begrenzende, radial nach innen gerichtete scharfe Kante aufweist.

Eine solche Meßanordnung bzw. Meßblende ist aus AT-B 124 957 und US-A 3 469 446 bekannt.

Bei Meßanordnungen zur Durchflußmengenmessung von Fluidströmen wird die Differenz der Meßsignale gebildet, die von dem stromaufwärts und stromabwärts der Meßblende angeordneten Druckfühler gemessen werden, u.zw. in dem Differenzdruckumformer, dessen Ausgangssignal in einer bezeichnenden bzw. charakteristischen, nicht unbedingt jedoch linearen Beziehung zu der die Meßblende durchströmenden Fluidmenge steht. In der Regel besteht ein einfacher Algorithmus zur Bestimmung der Durchflußmenge aus dem vom Differenzdruckumformer erhaltenen Meßsignal.

Ziel der Erfindung ist vornehmlich einerseits die Erstellung einer Meßanordnung für die Durchflußmengenmessung von Fluidströmen, die zur Messung beliebiger Fluidströme, insbesondere jedoch vorteilhaft bei Gasströmen einsetzbar ist, die bei Verbrennungskraftmaschinen auftreten, wie z.B. Ansaugluft, Blow-By-Gas (Durchblasgas), Abgas, usw. sowie anderseits die Schaffung von verbesserten Meßblenden. Insbesondere ist es Ziel der Erfindung, eine Meßanordnung zu erstellen, mit der Strömungsmessungen vorgenommen werden können, bei denen Durchflußmengen von pulsierenden, d.h. in beiden Richtungen strömenden, Fluiden, insbesondere Gasen, gemessen werden. Bei einer derartigen Meßanordnung soll, insbesondere durch Ausgestaltung der Meßblenden, eine Beeinflussung der Meßsignale durch Verschmutzungen vermieden werden, und es sollen Messungen bei kleinen Differenzdrücken und kleinen Gegendrücken vor der Meßblende möglich sein.

Diese Ziele der Erfindung werden bei einer Meßanordnung der eingangs genannten Art erfindungsgemäß dadurch erreicht, daß die Meßblende zumindest im Bereich der scharfen Kante in bezug auf eine durch die scharfe Kante der Durchflußöffnung der Meßblende verlaufende Ebene symmetrisch aufgebaut ist, wobei der Flankenwinkel der scharfen Kante höchstens 110°, vorteilhaft höchstens 90°, beträgt. Vorzugsweise beträgt der Flankenwinkel der symmetrischen scharfen Kante der Meßblende 70 bis 110°. Zweckmäßig ist dabei die Meßblende über den ganzen Bereich im Inneren des Rohres in bezug auf eine durch die scharfe Kante der Durchflußöffnung der Meßblende verlaufende Ebene symmetrisch aufgebaut.

Eine erfindungsgemäß derart aufgebildete Meßanordnung ist deshalb für Durchflußmessungen pulsierender Fluidströmungen mit Vorteil einsetzbar, da auch in negative Richtung strömende Fluidströme bei etwa gleichen Strömungsbedingungen durch die Meßblende untersucht werden können, so daß auch bei pulsierenden Fluid-, insbesondere Gasströmen, genaue Meßergebnisse in beiden Strömungsrichtungen erhalten werden können. Eine Verschmutzung der Durchflußöffnung wird durch die Ausbildung der Durchflußöffnung mit einer symmetrischen scharfen Kante mit dem angegebenen Flankenwinkel vermieden.

Bei einer bevorzugten Ausführungsform der Meßanordnung nach der Erfindung ist vorgesehen, daß vorzugsweise zum Anschluß an die Kurbelgehäuseentlüftung einer Verbrennungskraftmaschine im Rohr an einer Seite der Meßblende – bei Vorliegen einer bevorzugten bzw. überwiegenden Strömungsrichtung des Fluidstromes stromaufwärts der Meßblende oder bei Anschluß der Meßanordnung an eine Kurbelgehäuseentlüftung einer Verbrennungskraftmaschine in dem zwischen der Kurbelgehäuseentlüftung und der Meßblende gelegenen Bereich – ein Gegendrucksensor bzw. eine Gegendruckmeßleitung eines Gegendruckfühlers zur Bestimmung des vor der Meßblende herrschenden Gegendruckes angeordnet ist. Dieser Gegendrucksensor dient zur Feststellung des vor der Meßblende herrschenden Druckes, wenn die Meßanordnung z.B. an die Kurbelgehäuseentlüftung eines Verbrennungsmotors angeschlossen ist und Blow-By-Gasströmungen gemessen werden sollen. In diesem Fall spielt der vor der Meßblende herrschende Gegendruck eine gewissen Rolle, da der durch die Meßblende erzeugte Gegendruck nicht über einen bestimmten Wert ansteigen darf. Vorteilhaft ist es nämlich, wenn bei Messungen von Gasströmen an Verbrennungskraftmaschinen, wobei die Meßanordnung an die Kurbelgehäuseentlüftung angeschlossen ist, mit der Meßblende ein Differenzdruck von 0,03 bis 10 mbar und ein Gegendruck kleiner als 1 mbar einstellbar ist.

Wenig Aufwand verursacht es, wenn zum Nullpunktabgleich des Differenzdruckumformers die Druckmeßleitungen von dem Rohr trennbar bzw. abschaltbar und an eine Druckausgleicheinheit anschließbar sind, mit der beide Druckmeßleitungen gleichzeitig gleichem Druck, vorzugsweise Atmosphärendruck, aussetzbar oder druckmäßig kurzschließbar sind.

Besonders vorteilhaft ist es, wenn bei der Messung von Gasströmungen an Verbrennungskraftmaschinen der Auswerteeinheit zusätzlich zu den Meßsignalen des Differenzdruckumformers und bzw. oder des Gegendruckfühlers Signale eines Winkelmarkengebers und bzw. oder einer Zündfolgemeßeinrichtung und bzw. oder einer Meßeinheit für die Zylinderanzahl und bzw. oder einer Drehzahlmeßeinrichtung zugeführt sind.

Bei einer derartigen Ausbildung der Meßanordnung können die Meßergebnisse z.B. den einzelnen Zylindern einer Verbrennungskraftmaschine zugeordnet werden und Rückschlüße auf die Funktion erfolgen. Zweckmäßig ist es dabei, wenn der Differenzdruckumwandler eine Dynamik von etwa 1000 Hz aufweist, was gestattet, mit einer Ansprechzeit von etwa 1 ms zu messen, welche kurze Ansprechzeit für derartige dynamische Messungen geeignet ist, die z.B. im Luftansaugrohr, an der Kurbelgehäuseentlüftung usw. durchgeführt werden.

Um eine einfach aufgebaute Meßanordnung zu erhalten, und um eine Beeinträchtigung der Meßsignale durch die zum universellen Einsatz und raschen Umrüsten notwendigen konstruktiven Ausgestaltungen zu vermeiden, ist vorteilhaft vorgesehen, daß in dem gegebenenfalls aus zwei Rohrteilen bestehenden Rohr der Meßanordnung ein relativ zum Rohr verschiebbarer Blendenträger gelagert ist, von dem eine Anzahl gegebenenfalls unterschiedlicher Meßblenden getragen ist. Dabei ist es zweckmäßig, wenn die stromaufwärts und stromabwärts des Blendenträgers gelegenen Rohrteile durch Verschlüsse miteinander dichtend verriegelbar sind. Damit wird es auch möglich, die eingesetzten Meßblenden bei einer eventuellen Verschmutzung oder Wahl eines anderen Meßbereiches einfach nur mit kurzer Meßzeitunterbrechung auszutauschen.

Vorteilhafterweise ist vorgesehen, daß auf dem Blendenträger und bzw. oder auf den Meßblenden Kennungen vorgesehen sind, die der Stellung des Blendenträgers und bzw. oder der Charakteristik der Meßblenden entsprechen, wobei vorzugsweise elektronische Abtasteinrichtungen vorgesehen sind, mit denen die abgetasteten Kennungen bzw. die charakteristischen Daten der Meßblenden der Auswerteeinheit zuführbar sind. Damit wird eine automatische Meßblendenerkennung in der Auswerteeinheit möglich bzw. die Auswerteeinheit wird mit Signalen versorgt, welche Meßblende sich momentan im Einsatz befindet.

Gemäß der weiteren Ausgestaltung der Erfindung kann die zumindest im Bereich der scharfen Kante symmetrisch aufgebaute Meßblende auch außerhalb der scharfen Kante eine ungleiche, insbesondere eine nahe der Rohrwand größere Dicke aufweisen, wobei der Übergang von der scharfen Kante zu den Meßblendenflanken und bzw. oder der Flankenübergang zwischen verschieden dicken Meßblendenabschnitten stetig oder stufenförmig sein kann. Hiebei kann die Ausbildung auch so gewählt werden, daß die Meßblende symmetrisch an einem Innenring sitzt, der symmetrisch von einem dickeren an der Rohrinnenwand angeordneten Außenring getragen wird, wobei sowohl der Innen- als auch der Außenring in bezug auf die durch die scharfe Kante verlaufende Ebene symmetrisch angeordnet aufgebaut sind.

Außerdem dient der Gegendruckfühler auch dazu, während des von Zeit zu Zeit notwendig werdenden Nullpunktabgleiches des Differenzdruckumformers ein Meßsignal zu liefern, mit dem eine Kontinuität der Messungen während des Nullpunktabgleiches erreicht werden kann. Zu diesem Zweck ist erfindungsgemäß vorgesehen, daß während der Zeit des Nullpunktabgleichs des Differenzdruckumformers dieser vom Rohr abgeschaltet wird, wogegen der Gegendruckfühler mit dem Rohr einerseits und der Auswerteeinheit anderseits verbunden bleibt, so daß als Meßsignal für die die Meßblende durchströmende Fluidmenge ein vom Druckmeßwert des Gegendruckfühlers abhängiges Meßsignal der Auswerteeinheit zugeführt wird. In diesem Fall wird für die Zeit des Nullpunktabgleiches des Differenzdruckumformers der Auswerteeinheit ein Meßsignal zugeführt, das unter Zuhilfenahme bestimmter, vor Meßbeginn ermittelter Zusammenhänge zwischen dem vor der Meßblende herrschenden Gegendruck und der durchströmenden Fluid-, insbesondere Gasmenge, auswertbar ist und somit für die Meßblende durchströmende Fluid-, insbesondere Gasströmung, charakteristisch ist.

Als eine Alternative ist vorgesehen, daß während der Zeit des Nullpunktabgleiches des Differenzdruckumformers dieser vom Rohr abgeschaltet wird, und daß als Meßsignal für die die Meßblende durchströmende Fluidmenge das bei Beginn des Nullpunktabgleiches vorliegende Meßsignal des Differenzdruckumformers der Auswerteeinheit zugeführt wird. Gemäß der weiteren Alternative ist vorgesehen, daß während der Zeit des Nullpunktabgleiches des Differenzdruckumformers dieser vom Rohr abgeschaltet wird, und als Meßsignal für die die Meßblende durchströmende Fluidmenge der aus dem zu Beginn des Nullpunktabgleiches und dem zu Wiederbeginn der Messung vorliegenden Meßsignal des Differenzdruckumformers gebildete Mittelwert der Auswerteeinheit zugeführt wird.

Eine erfindungsgemäße Meßblende für eine Meßanordnung zur Durchflußmengenmessung von Fluidströmen, insbesondere von bei Verbrennungskraftmaschinen auftretenden Gasströmen, wobei das Fluid durch die in einem Rohr angeordnete Meßblende geführt ist, wobei die Meßblende eine ihre Durchflußöffnung begrenzende, radial nach innen gerichtete scharfe Kante aufweist, ist in der Weise gestaltet, daß – insbesondere für Durchflußmengenmessungen pulsierender Fluidströme – die Meßblende zumindest im Bereich der scharfen Kante, vorzugsweise in ihrem sich in das Innere des Rohres erstreckenden Bereich, zweckmäßig über den ganzen Bereich im Inneren des Rohres, in bezug auf eine durch die scharfe Kante der Durchflußöffnung der Meßblende verlaufende Ebene symmetrisch aufgebaut ist, wobei der Flankenwinkel der scharfen Kante höchstens 110°, vorteilhaft höchstens 90°, beträgt. Wie bereits oben erwähnt, kann dann bevorzugt der Flankenwinkel ihrer symmetrischen scharfen Kante 70 bis 110° betragen. Außerdem ist es möglich, die Meßblende so zu formen, daß sie außerhalb der scharfen Kante nahe der Rohrwand eine ungleiche, insbesondere eine grössere Dicke aufweist, wobei der Übergang von der scharfen Kante zu den Meßblendenflanken und/oder der Flankenübergang zwischen verschieden dicken Meßblendenabschnitten stetig oder stufenförmig ist. Für die Praxis kann es günstig sein, wenn die Meßblendenkante, insbesondere symmetrisch, an einem Innenring sitzt, der von einem dickeren an der Rohrinnenwand angeordneten Außenring getragen wird, wobei vorteilhaft sowohl der Innen- als auch der Außenring in bezug auf die durch die scharfe Kante verlaufende Ebene symmetrisch angeordnet und aufgebaut sind.

An sich ist – wie beispielsweise die AT-B 124 957 erkennen läßt – ein Meßring bekannt geworden, der eine seine Durchströmöffnung begrenzende radial nach innen gerichtete Kante aufweist. Dieser Meßring ist jedoch im Bereich dieser Kante in Bezug auf eine durch diese Kante der Durchströmöffnung des Meßringes verlaufende Ebene asymmetrisch aufgebaut und der Flankenwinkel der Kante beträgt etwa 120°. Da somit die symmetrisch aufgebaute scharfe Kante mit einem Kantenwinkel unter 110° fehlt, können mit dem bekannten Meßring die erfindungsgemäßen Effekte bezüglich pulsierender Fluidströme und hinsichtlich der Reinhaltung einer Meßblende nicht zustande kommen. Dies gilt erst recht für die Meßblenden nach DIN 1952, Seiten 8, 17 und 34, die Flankenwinkel von etwa 150° aufweisen.

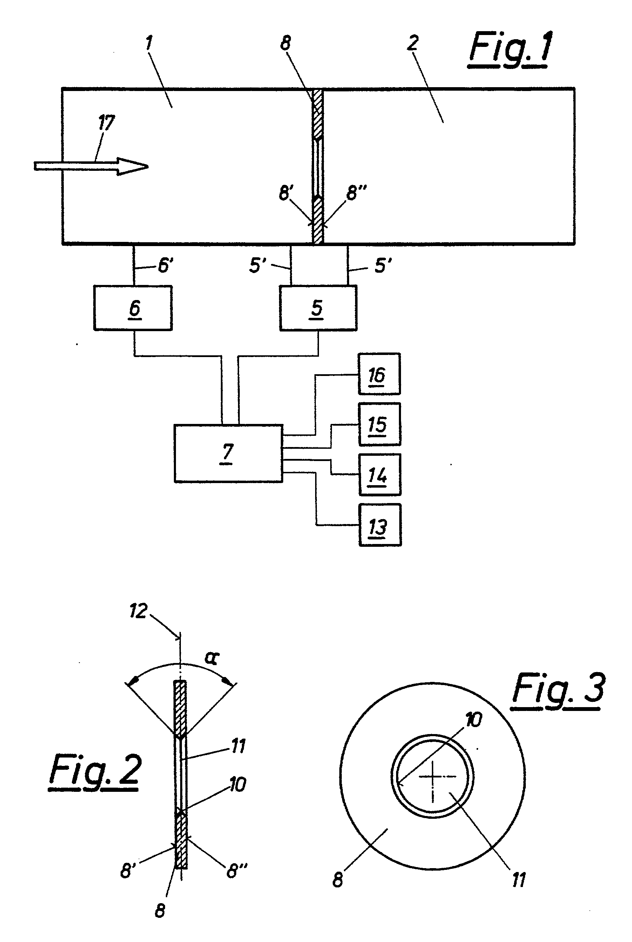

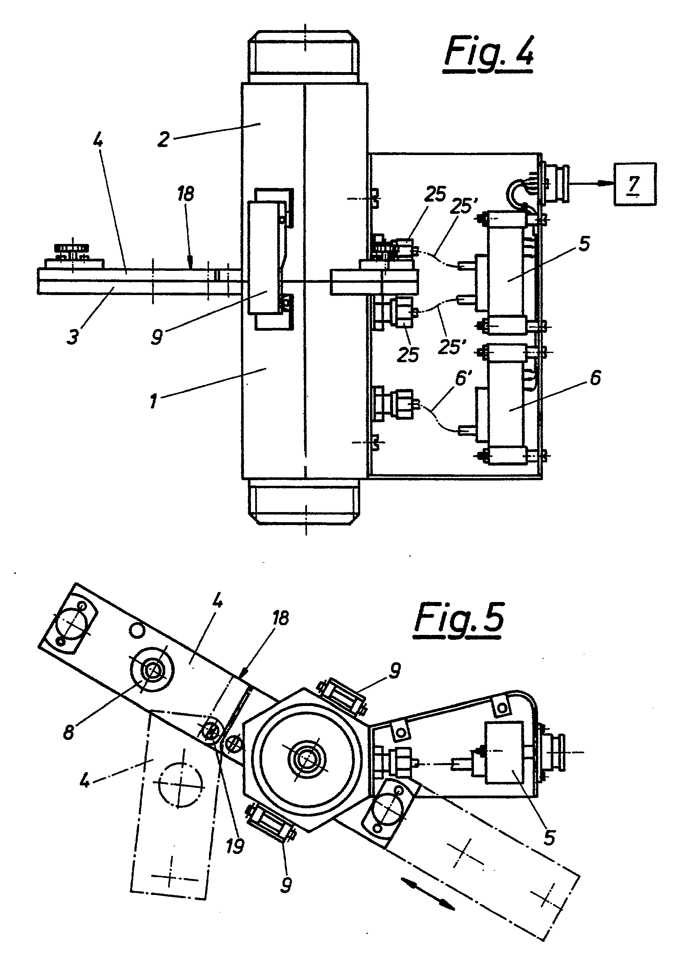

Im folgenden wird die Erfindung anhand der Zeichnung näher erläutert. Es zeigen: Fig. 1 eine Prinzipskizze einer erfindungsgemäßen Meßanordnung mit einer erfindungsgemäßen Meßblende, Fig. 2 einen Schnitt durch eine erfindungsgemäße Meßblende, Fig. 3 eine Draufsicht auf eine erfindungsgemäße Meßblende, Fig. 4 eine schematische Aufrißansicht einer erfindungsgemäßen Meßanordnung und Fig. 5 eine Ansicht der erfindungsgemäßen Meßanordnung gemäß Fig. 4 von oben.

Fig. 1 zeigt das Prinzipschema einer erfindungsgemäßen Meßanordnung. In einem Rohr, das im vorliegenden Fall aus zwei Rohrteilen 1,2 besteht, ist eine Meßblende 8 angeordnet. Die Meßblende 8 ist zwischen den beiden Rohrteilen 1,2 angeordnet, wobei die Verbindung zwischen der Meßblende 8 und den Rohrteilen 1,2 fluid- bzw. gasdicht ausgebildet ist. Ein Differenzdruckumformer 5 mißt über zu beiden Seiten der Meßblende 8 in die Rohrteile 1,2 mündende Druckmeßleitungen 5' oder über zu an beiden Seiten der Meßblende 8 angeordnete Drucksensoren führende elektrische Meßleitungen den Druck beidseitig der Meßblende 8 und bildet den Differenzdruck, der ein Maß für die die Meßblende 8 durchströmende Fluid-, insbesondere Gasmenge, darstellt. Ein dem Differenzdruck entsprechendes elektrisches Meßsignal wird vom Differenzdruckumformer einer Auswerteeinheit 7 zugeführt.

Auf einer Seite der Meßblende 8, insbesondere auf der Seite, an der die Meßanordnung an eine Fluid-, insbesondere Gasleitung, angeschlossen ist, aus der Gase ausströmen, ist ein Gegendruckfühler 6 über eine Druckmeßleitung 6' an den Rohrteil 1 angeschlossen, um den vor der Meßblende 8 herrschenden Gegendruck zu messen, der durch die Meßblende 8 hervorgerufen wird. Das elektrische Ausgangssignal des Gegendruckfühlers 6 ist ebenfalls der Auswerteeinheit 7 zugeführt. Anstelle des Gegendruckfühlers 6 kann auch ein in die Rohrwand eingesetzter Drucksensor 25 (Fig. 4,5) vorgesehen sein, dessen elektrisches Ausgangssignal der Auswerteeinheit zugeführt ist.

Die an sich bekannte Formel, die den Zusammenhang zwischen dem Durchfluß durch die Meßblende 8 und der gemessenen Druckdifferenz wiedergibt, lautet: $Q = (\text{delta } p / k)^{1/2}$, wobei in der Konstanten k die Dichte, die Temperatur, die Zähigkeit und die Kontraktionszahl des Fluids enthalten sind. Auch kann durch Messungen der Zusammenhang zwischen dem Durchfluß durch die Meßblende und dem vor der Blende herrschenden Gegendruck für bestimmte Fluide ermittelt werden. Der Gegendruck wird dabei im wesentlichen durch das Verhältnis des Rohrdurchmessers zur Durchflußöffnung 11 der Meßblende 8 bestimmt und hängt ferner von der Durchflußzahl und von der Kontraktionszahl ab.

Der Pfeil 17 in Fig. 1 zeigt im vorliegenden Fall eine bevorzugte bzw. vorherrschende Strömungsrichtung des Fluids, insbesondere Gases, im Rohr der Meßanordnung an, der jedoch Pulsationen überlagert sein können. Auch pulsierende Fluid-, insbesondere Gasströmungen, können gemessen werden, da die Meßanordnung aufgrund der Form der Meßblende 8 auch für die Messung negativer Strömungsrichtungen (entgegengesetzt zu Pfeil 17) geeignet ist.

Die in das Rohr der Meßanordnung eingesetzte Meßblende 8 ist im Schnitt in Fig. 2 dargestellt. Die Meßblende 8 besitzt zwei zueinander parallele Stirnflächen 8',8", die voneinander axial beabstandet sind. Zwischen den Stirnflächen 8',8" der Meßblende 8 verläuft deren Symmetrieebene 12, die somit von jeder der Stirnflächen 8',8" den gleichen Abstand besitzt. In der Symmetrieebene 12 der Meßblende 8 verläuft eine die Durchflußöffnung 11 der Meßblende 8 nach innen begrenzende scharfe Kante 10. Der Winkel $\alpha$, den die Flanken der scharfen Kante miteinander einschließen, beträgt zwischen 70 bis 110°, vorzugsweise beträgt der Winkel jedoch 90°. Durch diese Bemessung wird eine Messung pulsierender Fluid-, insbesondere Gasströme, möglich und eine Verschmutzung durch Ablagerungen auf der nicht angeströmten Seite der Meßblende 8 im Kantenbereich bzw. eine Verfälschung der Meßergebnisse vermieden.

Fig. 3 zeigt eine Draufsicht auf die in Fig. 2 im Schnitt dargestellte Meßblende 8. Die Größe der Durchflußöffnung 11 der Meßblende 8 wird in Abhängigkeit von der gewünschten Durchflußzahl, der Reynold'schen Zahl des Fluids, insbesondere Gases, dessen Kontraktionszahl bzw. des gewünschten Bereiches für den Differenzdruck bzw. für den Gegendruck gewählt. Die Meßblende 8 mit dem angegebenen Kantenwinkel eignet sich insbesondere gut für Bereiche eines Differenzdruckes von 3 bis 1000 Pa und Bereiche eines Gegendruckes von weniger als 10 Pa, wobei kleine Durchflußzahlen und kleine Reynold'sche Zahlen für die gemessenen Fluide, insbesondere Gase, vorteilhaft sind. Die Durchflußöffnung 11 ist bevorzugterweise kreisförmig, kann aber auch z.B. elliptischen Querschnitt haben. Die Durchflußöffnung 11 ist bevorzugterweise zentral im Rohr bzw. koaxial zur Rohrachse angeordnet. Die Meßblende 8 ist zur Ebene 12 symmetrisch und besitzt bevorzugterweise parallele Stirnflächen 8',8". Unter Wahrung der Symmetrie können die Stirnflächen jedoch auch zum Rohr hin divergieren oder konvergieren bzw. einen vorgegebenen, von einer Geraden abweichenden Verlauf aufweisen. Bevorzugt ist es auch, wenn die Meßblende 8 zentrisch symmetrisch bezüglich der Achse der Durchflußöffnung 11 ausgebildet ist.

In der in Fig. 1 dargestellten Auswerteeinheit 7 wird das von dem Differenzdruckumformer 5 erhaltene Meßsignal in ein Signal umgerechnet, das dem Massestrom des Fluides, insbesondere Gases, durch die Meßblende 8 entspricht. Ferner kann die Auswerteeinheit 7 Mittelungszeiten einstellen, den vorhandenen Gegendruck messen und überwachen, auftretende Blendenverschmutzungen aufgrund der Meßsignale des Gegendruckfühlers 6 erkennen und bei Nullpunktabgleichen des Differenzdruckumformers 5 für eine Kontinuität der Messung sorgen.

Während der Dauer des von Zeit zu Zeit notwendigen Nullpunktabgleiches des Differenzdruckumformers 5 kann das vom Gegendruckfühler 6 zur Auswerteeinheit 7 gelangende Meßsignal als Meßwert für die die Blendenöffnung 11 durchströmende Fluid-, insbesondere Gasmenge, verwendet werden. Dazu wird in vorangehenden Messungen der Zusammenhang zwischen dem Durchfluß des Fluids, insbesondere Gases, durch die Durchflußöffnung 11 und dem Gegendruck vor der Meßblende 8, der durch den Gegendruckfühler 6 aufgenommen wird, ermittelt und während des Nullpunktabgleiches der jeweils vom Gegendruckfühler 6 gemessene, tatsächlich vorhandene Gegendruck als Meßsignal für den Durchfluß herangezogen.

Es ist z.B. aber auch möglich, während der gesamten Zeit des Nullpunktabgleiches des Differenzdruckumformers 5 den zu Anfang des Nullpunktabgleiches anliegenden Meßwert des Gegendruckes als Meßsignal für die die Durchflußöffnung 11 durchströmende Menge zu verwenden.

Eine weitere Möglichkeit besteht darin, als Meßsignal für die Dauer des Nullpunktabgleiches einen Mittelwert heranzuziehen, der gebildet wird aus den Meßwerten des Gegendruckes oder des Differenzdruckes bei Beginn und Ende des Nullpunktabgleiches.

Eine entsprechende Auswahl des für die Dauer des Nullpunktabgleiches zu verwendenden Meßsignals erfolgt durch entsprechende Einstellung der Auswerteeinheit 7. Durch eine derartige Verfahrensweise stehen immer der Strömungsmenge entsprechende Meßsignale zur Verfügung.

Um bei der Messung von Gasströmungen an Verbrennungskraftmaschinen, die üblicherweise Messungen im Ansaugrohr oder an der Kurbelgehäuseentlüftung sind, die Meßergebnisse dem Verhalten bzw. Fehlverhalten einzelner Zylinder zuordnen zu können, ist es vorteilhaft, wenn an die Auswerteeinheit 7 ein Winkelmarkengeber 13 und/oder eine Zündfolgemeßeinrichtung 14 und/oder eine Meßeinheit 15 für die Zylinderanzahl und/oder eine Drehzahlmeßeinrichtung 16 angeschlossen sind, die der Auswerteeinheit 7 entsprechende Daten bzw. Meßsignale zuleiten, die in der Auswerteeinheit 7 entsprechend miteinander verknüpft werden.

Durch eine schnelle Ansprechzeit (Response-time) des Differenzdruckumformers 5 kann z.B. beim Einsatz der Meßanordnung zur Messung des Blow-By-Gases (Durchblasgases) bei Verbrennungsmotoren jeder Zylinder einzeln vermessen werden, wobei in der Auswerteeinheit 7 Anzeigen für das Maximum, das Minimum, den Abstand von Spitze zu Spitze und für einen Mittelwert der Gasströmung für jeden einzelnen Zylinder vorgesehen sein können.

Fig. 4 zeigt in einem schematischen Aufriß eine Meßanordnung, die in Fig. 5 in Draufsicht dargestellt ist. Ein aus den Rohrteilen 1,2 bestehendes Rohr der Meßanordnung wird von einem Blendenträger 18 durchsetzt, auf dem eine Anzahl von gegebenenfalls unterschiedlichen Meßblenden 8 angeordnet ist. Die beiden Rohrteile 1,2 werden von Verriegelungseinrichtungen 9 dicht zusammengehalten und können beim Lösen dieser Verriegelungseinrichtungen, z.B. von einer Feder, auseinandergedrückt werden, um eine Verschiebung des Blendenträgers 18 und Einführung einer anderen Meßblende 8 in das Rohr zuzulassen. Zum Auswechseln einer Meßblende 8 ist es vorteilhaft, wenn der Blendenträger 18 aus einem Unterteil 3 und einem gegenüber diesem um eine Achse 19 verschwenkbar gelagerten Oberteil 4 ausgebildet ist, zwischen denen die jeweiligen Meßblenden 8 einsetzbar sind. In Fig. 4 erkennt man beidseits der Meßblenden 8 bzw. des Meßblendenträgers 18 angebrachte Drucksensoren 25, die über Leitungen 25' die dem gemessenen Druck entsprechenden elektrischen Ausgangssignale dem Differenzdruckumwandler 5 zuführen, der sodann ein Differenzsignal bildet und dieses an die Auswerteeinheit weiterleitet.

In gleichartiger Weise können in das Rohr eingesetzte Drucksensoren, die über elektrische Meßleitungen zu dem Differenzdruckwandler 5 und zum Gegendruckfühler 6 führen, oder in das Rohr mündende Druckleitungen verwendet werden, die vom Rohr zum Differenzdruckwandler und zum Gegendruckfühler führen, in welchen sodann druckempfindliche Einrichtungen vorgesehen sind, welche Druckschwankungen in elektrische Signale umsetzen.

Am Blendenträger 18 kann eine Positioniereinrichtung vorgesehen sein, die die Einstellung einer exakten zentrischen Lage der vom Blendenträger 18 getragenen Meßblenden 8 ermöglicht. Während sich eine Meßblende 8 im Rohr der Meßanordnung befindet, können die anderen vom Blendenträger 18 getragenen Meßblenden 8 gewechselt oder gereinigt werden.

Um die in die Meßanordnung eingeführte Meßblende 8 zu erkennen und der Auswerteeinheit 7 ein entsprechendes Meßsignal zuführen zu können, werden die Meßblenden 8 mit entsprechenden Kennungen, z.B. Druckkontakten, Erhebungen, od.dgl., versehen und mit Abtasteinrichtungen abgefühlt, deren Signale der Auswerteeinheit 7 zugeführt werden.

Die erfindungsgemäße Meßblende bzw. die erfindungsgemäße Meßanordnung kann insbesondere für Motorprüfstände eingesetzt werden, aber auch in Fahrzeuge eingebaut werden, z.B. zur Überwachung des Motors.

Es wird bemerkt, daß die erfindungsgemäße Meßblende bzw. Meßanordnung für alle Fluide, d.h. Gase und Flüssigkeiten, prinzipiell in gleicher Weise einsetzbar ist, da Flüssigkeitsströme und Gasströme im wesentlichen gleiches Strömungsverhalten zeigen. In bevorzugter Weise wird jedoch die erfindungsgemäße Meßblende bzw. Meßanordnung für Messungen bei Verbrennungskraftmaschinen eingesetzt.

Der Flankenwinkel der scharfen Kante 10 beträgt erfindungsgemäß höchstens 110°, zweckmäßig 70–110°, vorteilhaft höchstens 90°.

Bei einer bevorzugten Ausführungsform der Erfindung ist vorgesehen, daß die Meßanordnung an die Kurbelgehäuseentlüftung einer Verbrennungskraftmaschine angeschlossen ist.

Es kann ferner vorgesehen sein, daß die Stirnflächen der Meßblende insbesondere abweichend von einer Ebene zur Rohrinnenwand hin divergieren oder konvergieren.

Schließlich sollen noch die erfindungsgemäßen Verfahren zum Nullpunktabgleich des Differenzdruckumformers in einer mit einer erfindungsgemäßen Meßblende versehenen erfindungsgemäßen Meßanordnung erläutert werden. Bei einem derartigen Verfahren wird während der Zeit des Nullpunktabgleichs des Differenzdruckumformers 5 dieser vom Rohr 1 abgeschaltet, wogegen der Gegendruckfühler 6 mit dem Rohr 1 einerseits und der Auswerteeinheit 7 anderseits verbunden bleibt, so daß als Meßsignal für die die Meßblende 8 durchströmende Fluid-, insbesondere Gasmenge, ein vom Druckmeßwert des Gegendruckfühlers 6 abhängiges Meßsignal der Auswerteeinheit 7 zugeführt wird. Bei einem weiteren Verfahren wird am Anfang des Nullpunktabgleichs des Differenzdruckumformers 5 der Wert des Gegendrucks mittels des Gegendruckfühlers 6 gemessen und während der Zeit des Nullpunktabgleichs des Differenzdruckumformers 5 dieser vom Rohr 1 abgeschaltet, wogegen der Gegendruckfühler 6 mit dem Rohr 1 einerseits und der Auswerteeinheit 7 anderseits verbunden bleibt, so daß als Meßsignal für die die Meßblende 8 durchströmende Fluid-, insbesondere Gasmenge, das bei Beginn des Nullpunktabgleiches vorliegende Meßsignal des Differenzdruckumformers 5 der Auserteeinheit 7 zugeführt wird. Bei einem weiteren Verfahren wird vorerst der Mittelwert aus dem zu Beginn des Nullpunktabgleiches und dem zu Wiederbeginn der Messung vorliegenden Meßsignal des Differenzdruckumformers 5 gebildet und während der Zeit des Nullpunktabgleichs des Differenzdruckumformers 5 dieser vom Rohr 1 abgeschaltet, wogegen der Gegendruckfühler 6 mit dem Rohr 1 einerseits und der Auswerteeinheit 7 anderseits verbunden bleibt, so daß als Meßsignal für die die Meßblende 8 durchströmende Fluid-, insbesondere Gasmenge, der vorerwähnte Mittelwert der Auswerteeinheit 7 zugeführt wird.

## Patentansprüche

1. Meßanordnung zur Durchflußmengenmessung von Fluidströmen, insbesondere von bei Verbrennungskraftmaschinen auftretenden Gasströmen, wobei das Fluid durch zumindest eine in einem Rohr (1, 2) angeordnete Meßblende (8) geführt ist, die eine ihre Durchflußöffnung (11) begrenzende, radial nach innen gerichtete scharfe Kante (10) aufweist, und wobei sowohl stromaufwärts als auch stromabwärts der Meßblende ein Druckfühler bzw. eine Druckmeßleitung (5') eines Differenzdruckmeßgerätes bzw. Differenzdruckumformers (5) angeordnet ist, dessen vom Differenzdruck abhängiges Ausgangssignal das Meßsignal für die die Meßblende durchströmende Fluidmenge bildet, dadurch gekennzeichnet, daß die Meßblende (8) zumindest im Bereich der scharfen Kante in bezug auf ein durch die scharfe Kante (10) der Durchflußöffnung (11) der Meßblende (8) verlaufende Ebene (12) symmetrisch aufgebaut ist, wobei der Flankenwinkel (α) der scharfen Kante (10) höchstens 110°, vorteilhaft höchstens 90°, beträgt.

2. Meßanordnung nach Anspruch 1, dadurch gekennzeichnet, daß die Meßblende (8) über den ganzen Bereich im Inneren des Rohres in bezug auf eine durch die scharfe Kante (10) der Durchflußöffnung (11) der Meßblende (8) verlaufende Ebene (12) symmetrisch aufgebaut ist.

3. Meßanordnung nach Anspruch 1 oder 2, dadurch gekennzeichnet, daß der Flankenwinkel (α) der symmetrischen scharfen Kante (10) der Meßblende (8) 70 bis 110° beträgt.

4. Meßanordnung, nach einem der Ansprüche 1 bis 3, vorzugsweise zum Anschluß an die Kurbelgehäuseentlüftung einer Verbrennungskraftmaschine, dadurch gekennzeichnet, daß im Rohr an einer Seite der Meßblende (8), – bei Vorliegen einer bevorzugten bzw. überwiegenden Strömungsrichtung des Fluidstromes stromaufwärts der Meßblende (8) oder bei Anschluß der Meßanordnung an eine Kurbelgehäuseentlüftung einer Verbrennungskraftmaschine in dem zwischen der Kurbelgehäuseentlüftung und der Meßblende (8) gelegenen Bereich, – ein Gegendrucksensor bzw. eine Gegendruckmeßleitung (6') eines Gegendruckfühlers (6) zur Bestimmung des vor der Meßblende (8) herrschenden Gegendruckes angeordnet ist.

5. Meßanordnung nach einem der Ansprüche 1 bis 4, dadurch gekennzeichnet, daß zum Nullpunktabgleich des Differenzdruckumformers (5) die Druckmeßleitungen (5') von dem Rohr (1) trennbar bzw. abschaltbar bzw. an eine Druckausgleicheinheit anschließbar sind, mit der beide Druckmeßleitungen (5') gleichzeitig gleichem Druck, vorzugweise Atmosphärendruck, aussetzbar oder druckmäßig kurzschließbar sind.

6. Meßanordnung nach einem der Ansprüche 1 bis 5, dadurch gekennzeichnet, daß bei der Messung von Gasströmungen an Verbrennungskraftmaschinen der Auswerteeinheit (7) zusätzlich zu den Meßsignalen des Differenzdruckumformers (5) und oder des Gegendruckfühlers (6) Signale eines Winkelmarkengebers (13) und oder einer Zündfolgemeßeinrichtung (14) und oder einer Meßeinheit (15) für die Zylinderanzahl und oder einer Drehzahlmeßeinrichtung (16) zugeführt sind.

7. Meßanordnung nach einem der Ansprüche 1 bis 6, dadurch gekennzeichnet, daß bei Messungen von Gasströmen an Verbrennungskraftmaschinen, wobei die Meßanordnung an die Kurbelgehäuseentlüftung angeschlossen ist, mit der Meßblende (8) ein Differenzdruck von 3 bis 1000 Pa und ein Gegendruck kleiner als 100 Pa einstellbar ist.

8. Meßanordnung nach einem der Ansprüche 1 bis 7, dadurch gekennzeichnet, daß in dem Rohr (1, 2) der Meßanordnung ein relativ zum Rohr verschiebbarer Blendenträger (18) gelagert ist, von dem eine Anzahl gegebenenfalls unterschiedlicher Meßblenden (8) getragen ist.

9. Meßanordnung nach Anspruch 8, dadurch gekennzeichnet, daß das Rohr aus zwei Rohrteilen (1, 2) besteht.

10. Meßanordnung nach Anspruch 8 oder 9, dadurch gekennzeichnet, daß die stromaufwärts und stromabwärts des Blendenträgers (18) gelegenen Rohrteile (1, 2) durch Verschlüsse (9) miteinander dichtend verriegelbar sind.

11. Meßanordnung nach Anspruch 9, dadurch gekennzeichnet, daß auf dem Blendenträger (18) und bzw. oder auf den Meßblenden (8) Kennungen vorgesehen sind, die der Stellung des Blendenträgers (18) und bzw. oder der Charakteristik der Meßblenden (8) entsprechen, wobei vorzugsweise elektronische Abtasteinrichtungen vorgesehen sind, mit denen die abgetasteten Kennungen bzw. die charakteristischen Daten der Meßblenden (8) der Auswerteeinheit (7) zuführbar sind.

12. Meßanordnung nach einem der Ansprüche 1 bis 11, dadurch gekennzeichnet, daß die zumindest im Bereich der scharfen Kante symmetrisch aufgebaute Meßblende außerhalb der scharfen Kante eine ungleiche, insbesondere eine nahe der Rohrwand größere Dicke aufweist, wobei der Übergang von der scharfen Kante zu den Meßblendenflanken und/oder der Flankenübergang zwischen verschiedenen dicken Meßblendenabschnitten stetig oder stufenförmig ist.

13. Meßanordnung nach Anspruch 12, dadurch gekennzeichnet, daß die Meßblende symmetrisch an einem Innenring sitzt, der symmetrisch von einem dickeren an der Rohrinnenwand angeordneten Außenring getragen wird, wobei sowohl der Innen- als auch der Außenring in bezug auf die durch die scharfe Kante verlaufende Ebene symmetrisch angeordnet und aufgebaut sind.

14. Verfahren zum Nullpunktabgleich des Differenzdruckumformers der Meßanordnung nach einem der Ansprüche 5 bis 13, bei dem während der Zeit des Nullpunktabgleichs des Differenzdruckumformers (5) dieser vom Rohr (1) abgeschaltet wird, wogegen der Gegendruckfühler (6) mit dem Rohr (1) einerseits und der Auswerteeinheit (7) anderseits verbunden bleibt, so daß als Meßsignal für die die Meßblende (8) durchströmende Fluidmenge ein vom Druckmeßwert des Gegendruckfühlers (6) abhängiges, einen vorbestimmten Zusammenhang zwischen dem vom Gegendruckfühler (6) gemessenen Druck und der die Meßblende (8) durchströmenden Fluidmenge entsprechendes Meßsignal der Auswerteeinheit (7) zugeführt wird.

15. Verfahren zum Nullpunktabgleich des Differenzdruckumformers der Meßanordnung nach einem der Ansprüche 5 bis 13, bei dem während der Zeit des Nullpunktabgleichs des Differenzdruckumformers (5) dieser vom Rohr (1) abgeschaltet wird, und bei dem als Meßsignal für die die Meßblende (8) durchströmende Fluidmenge das bei Beginn des Nullpunktabgleiches vorliegende Meßsignal des Differenzdruckumformers (5) der Auswerteeinheit (7) zugeführt wird.

16. Verfahren zum Nullpunktabgleich des Differenzdruckumformers der Meßanordnung nach einem der Ansprüche 5 bis 13, bei dem während der Zeit des Nullpunktabgleichs des Differenzdruckumformers (5) dieser vom Rohr (1) abgeschaltet wird und bei dem als Meßsignal für die die Meßblende (8) durchströmende Fluidmenge der aus dem zu Beginn des Nullpunktabgleichs und dem zu Wiederbeginn der Messung vorliegenden Meßsignal des Differenzdruckumformers (5) gebildete Mittelwert der Auswerteeinheit (7) zugeführt wird.

17. Meßblende für eine Meßanordnung zur Durchflußmengenmessung von Fluidströmen, insbesondere von bei Verbrennungskraftmaschinen auftretenden Gasströmen, wobei das Fluid durch die in einem Rohr (1, 2) angeordnete Meßblende (8) geführt ist, wobei die Meßblende eine ihre Durchflußöffnung (11) begrenzende, radial nach innen gerichtete scharfe Kante (10) aufweist, dadurch gekennzeichnet, daß – insbesondere für Durchflußmengenmessungen pulsierender Fluidströme – die Meßblende (8) zumindest im Bereich der scharfen Kante (10) in bezug auf eine durch die scharfe Kante (10) der Durchflußöffnung (11) der Meßblende (8) verlaufenden Ebene (12) symmetrisch aufgebaut ist, wobei der Flankenwinkel ($\alpha$) der scharfen Kante (10) höchstens 110°, vorteilhaft höchstens 90°, beträgt.

18. Meßblende nach Anspruch 17, dadurch gekennzeichnet, daß die Meßblende (8) in ihrem radial inneren Bereich in bezug auf eine durch die scharfe Kante (10) der Durchflußöffnung (11) der Meßblende (8) verlaufenden Ebene (12) symmetrisch aufgebaut ist.

19. Meßblende nach Anspruch 18, dadurch gekennzeichnet, daß die Meßblende (8) über den ganzen Bereich in bezug auf eine durch die scharfe Kante (10) der Durchflußöffnung (11) der Meßblende (8) verlaufende Ebene (12) symmetrisch aufgebaut ist.

20. Meßblende nach einem der Ansprüche 17 bis 19, dadurch gekennzeichnet, daß der Flankenwinkel ($\alpha$) ihrer symmetrischen scharfen Kante (10) 70° bis 110° beträgt.

21. Meßblende nach einem der Ansprüche 17 bis 20, dadurch gekennzeichnet, daß sie außerhalb der scharfen Kante (10) nahe der Rohrwand eine ungleiche, insbesondere eine größere, Dicke aufweist, wobei der Übergang von der scharfen Kante zu den Meßblendenflanken und/oder der Flankenübergang zwischen verschieden dicken Meßblendenabschnitten stetig oder stufenförmig ist.

22. Meßblende nach Anspruch 21, dadurch gekennzeichnet, daß die Meßblendenkante (10), insbesondere symmetrisch, an einem Innenring sitzt, der von einem dickeren radial außen angeordneten Außenring getragen wird, wobei vorteilhaft sowohl der Innen- als auch der Außenring in bezug auf die durch die scharfe Kante verlaufende Ebene symmetrisch angeordnet und aufgebaut sind.

**Claims**

1. A measuring apparatus for measuring the rate of flow of fluid streams, in particular gas streams generated in internal combustion enrgines, the fluid being made to pass through at least one plate orifice (8) disposed in a pipe (1,2) and having a sharp edge (10) defining its flow orifice (11) and being directed radially inwards, a pressure sensor or a pressure gauge line (5') of a differential pressure gauge or differential pressure transducer (5) being disposed upstream as well as downstream of the plate orifice, the output signal of the differential pressure transducer subject to the differential pressure forming the measuring signal for the fluid flowing through the plate orifice, characterized in that the plate orifice (8) is of symmetrical configuration at least in the area of the sharp edge in relation to a plane (12) passing through the sharp edge (10) of the flow orifice (11) of the plate orifice (8), the flank angle ($\alpha$) of the sharp edge (19) being 110° at the most, preferably 90° at the most.

2. The measuring apparatus according to claim 1, wherein the plate orifice (8) is of symmetrical configuration over the entire area on the inside of the pipe in relation to a plane passing through the sharp edge (10) of the flow orifice (11) of the plate orifice (8).

3. The measuring apparatus according to claim 1 or 2, wherein the flank angle ($\alpha$) of the symmetrical sharp edge (10) of the plate orifice (8) is one of 70 to 110°.

4. The measuring apparatus according to any one of the claims 1 to 3, preferably for connection to the crankcase ventilation of an internal combustion engine, wherein a counterpressure sensor or a counterpressure gauge line (6') of a counterpressure sensor (6) is disposed in the pipe on one side of the plate orifice (8) – in the case of a preferred or predominant flowing direction of the fluid stream upstream of the plate orifice (8), or, in the case of the connection of the measuring apparatus to a crankcase ventilation of an internal combustion engine, in the area situated between the crankcase ventilation and the plate orifice (8), for determining the counterpressure prevailing upstream of the plate orifice (8).

5. The measuring apparatus according to any one of the claims 1 to 4, wherein the pressure gauge lines (5') are separable or disconnectable from the pipe (1) or connectable to a pressure equalization unit for adjusting the zero point of the differential pressure transducer (5), both pressure gauge lines (5') being simultaneously subjectable to pressure, preferably atmospheric pressure or shortable in. respect of pressure.

6. The measuring apparatus according to any one of the claims 2 to 5, wherein in measuring the gas streams in internal combustion engines, the evaluation unit (7) is supplied in addition to the measuring signal of the differential pressure transducer (5) and/or the counterpressure sensor (6) with the signals of an angle indicator (13) and/or a timing sequence (ignition order) measuring means (14) and/or a measuring unit (15) for the number of cylinders and/or a speedometer means (16).

7. The measuring apparatus according to any one of the claims 1 to 6, wherein in measuring the gas streams in internal combustion engines in which the measuring apparatus is connected to the crankcase ventilation, a differential pressure of 3 to 1000 Pa and a counterpressure of less than 100 Pa is adjustable by means of the plate orifice (8).

8. The measuring apparatus according to any one of the claims 1 to 7, wherein a plate orifice support (18) carrying a plurality of optionally different plate orifices (8) is supported in the pipe (1,2) of the measuring apparatus displaceably in relation to the pipe.

9. The measuring apparatus according to claim 8, wherein the pipe consists of two pipe parts (1,2).

10. The measuring apparatus according to claim 8 or 9, wherein the pipe parts (1,2) disposed upstream and downstream of the plate orifice support (18) are sealingly lockable with one another by means of stoppers (9).

11. The measuring apparatus according to claim 9, wherein marks corresponding to the position of the plate orifice support (18) and/or the characteristics of the plate orifices (8) are provided on the plate orifice support (18) and/or on the plate orifices (8), electronic scanning means by means of which the detected marks or characteristic data of the plate orifices (8) are supplied to the evaluation unit (7) preferably being provided.

12. The measuring apparatus according to any one of the claims 1 to 11, wherein the plate orifice of symmetrical configuratoin at least in the area of the sharp edge is of uneven thickness, in particular greater thickness in the vicinity of the pipe wall, outside of the sharp edge, the transition from the sharp edge to the plate orifice flanks and/or the flank transition between plate orifice portions of different thicknesses being continuous or stepped.

13. The measuring apparatus according to claim 12, wherein the plate orifice is seated symmetrically on an inner ring which is symmetrically supported by a thicker outer ring arranged on the inner wall of the pipe, the inner as well as the outer ring being symmetrically arranged and constructed in relation to the plane passing through the sharp edge.

14. A process for the zero point equalization of the differential pressure transducer of the measuring apparatus according to any one of the claims 5 to 13, wherein the differential pressure transducer (5) is disconnected from the pipe (1) during the period of zero point equalization, while the counterpressure sensor (6) remains connected to the pipe (1), on the one hand, and to the evaluation unit (7), on the other hand, so that the measuring signal supplied to the evaluation unit (7) for the fluid volume flowing through the plate orifice (8) is a measuring signal depending on the pressure gauge value of the counterpressure sensor (6) and corresponding to a predetermined relation between the pressure measured by the counterpressure sensor (6) and the fluid flow passing the plate orifice (8).

15. A process for the zero point equalization of the differential pressure transducer of the measuring apparatus according to any one of the claims 5 to 13, wherein the differential pressure transducer (5) is disconnected from the pipe (1) during the period of zero point equalization, and wherein the measuring signal supplied to the evaluation unit (7) for the fluid flow through the plate orifice (8) is the measuring signal of the differential pressure transducer (5) available at the beginning of the zero point equalization.

16. A process for the zero point equalization of the differential pressure transducer of the measuring apparatus according to any one of the claims 5 to 13, wherein the differential pressure transducer (5) is disconnected from the pipe (1) during the period of zero point equalization, and wherein the measuring signal supplied to the evaluation unit (7) for the fluid flow through the plate orifice (8) is the mean value of the measuring signal available at the start of the zero point equalization and the measuring signal available at the restart of the measuring operation.

17. A plate orifice for a measuring apparatus for measuring the flow rate of fluid streams, in particular of gas streams generated in internal combustion engines, the fluid being passed through a plate orifice (8) disposed in a pipe (1,2), the plate orifice having a sharp edge (10) defining its flow orifice (11) and radially directed inwards, wherein – in particular for the flow rate measurements of pulsating fluid streams – the plate orifice (8) is symmetrical configuration at least in the area of the sharp edge (10) in relation to a plane (12) passing through the sharp edge (10) of the flow orifice (11) of the plate orifice (8), the flank angle (α) of the sharp edge being 110° at the most, preferable 90° at the most.

18. The plate orifice according to claim 17, wherein the plate orifice (8) is of symmetrical configuration in its radially inner area in relation to a plane (12) passing through the sharp edge (10) of the flow orifice (11) of the plate orifice (8).

19. The plate orifice according to claim 18, wherein the plate orifice (8) is of symmetrical configuration over the entire area in relation to a plane (12) passing through the sharp edge (10) of the flow orifice (11) of the plate orifice (8).

20. The plate orifice according to any one of the claims 17 to 19, wherein the flank angle (α) of its symmetrical sharp edge (10) is one of 70° to 110°.

21. The plate orifice according to any one of the claims 17 to 20, wherein it is of uneven, in particular greater, thickness outside of the sharp edge (10) in the vicinity of the pipe wall, the transition from the sharp edge to the plate orifice flanks and/or the flank transition between portions of plate orifices of various thicknesses being continuous or stepped.

22. The plate orifice according to claim 21, wherein the plate orifice edge (10) is seated, in particular symmetrically, on an inner ring which is supported by a thicker, radially outer ring, the inner ring as well as the outer ring conveniently being symmetrically arranged and constructed in relation to the plane passing through the sharp edge.

**Revendications**

1. Montage de mesure pour la mesure des débits de courants de fluide, en particulier des courants de gaz engendrés par les machines à combustion interne, le fluide conduit par au moins un orifice de mesure (8) disposé dans un tuyau (1, 2) et pourvu d'une arête vive (10) définissant sa chicane de débit (11) et orientée radialement vers l'intérieur, un capteur de pression ou une ligne de mesure de pression (5') d'un manomètre différentiel ou d'un transformateur (5) de pression différentielle en amont ainsi qu'en aval de l'orifice de mesure, le signal de sortie du transformateur de pression différentielle assujetti à la pression différentielle formant le signal de mesure pour le débit de fluide passant par l'orifice de mesure (8), caractérisé en ce que l'orifice de mesure est de conformation symmétrique au moins dans la région de l'arête vive par rapport à un plan (12) passant par l'arête vive (10) de la chicane de débit (11) de l'orifice de mesure (8), l'angle de pression (α) de l'arête vive (10) étant au plus de 110°, avantageusement au plus de 90°.

2. Montage de mesure selon la revendication 1, caractérisé en ce que l'orifice de mesure (8) est de conformation symmétrique sur l'entière zone de l'intérieur du tuyau par rapport à un plan (12) passant par l'arête vive (10) de la chicane de débit (11) de l'orifice de mesure (8).

3. Montage de mesure selon une des revendications 1 et 2, caractérisé en ce que l'angle de pression (α) de l'arête vive (10) symmétrique de l'orifice de mesure (8) est de 70 à 110°.

4. Montage de mesure selon une des revendications 1 à 3, de préférence pour le raccord au reniflard d'aération du carter d'une machine à combustion interne, caractérisé en ce que – en cas d'une direction d'écoulement préférée ou prédominante du courant de fluide – le tuyau est pourvu à une côté de l'orifice de mesure (8) en amont de l'orifice de mesure (8) ou, en cas du raccord du montage au reniflard d'aération du carter d'une machine à combustion interne, dans le domaine entre le reniflard d'aératoin du carter et l'orifice de mesure (8) – d'un palpeur de contre-pression ou une ligne (6') de mesure de contre-pression d'un palpeur de contre-pression (6) pour déterminer la contre-pression à laquelle est assujetti l'orifice de mesure (8) en amont.

5. Montage de mesure selon une des revendications 1 à 4, caractérisé en ce que pour l'équilibrage du zéro du transformateur (5) de pression différentielle, les lignes (5') de mesure de pression sont amovibles ou déconnectables du tuyau (1) ou raccordables à une unité d'équilibrage de pression à laquelle les deux lignes (5') de mesure de pression sont assujettables simultanément à la même pression, de préférence pression atmosphérique, ou court-circuitables par rapport à la pression.

6. Montage de mesure selon une des revendications 1 à 5, caractérisé en ce que pour la mesure des courants de gaz dans les machines à combustion interne, l'unité d'évaluation (7) est alimentée en addition aux signaux de mesure du transformateur (5) des pressions différentielles et/ou du palpeur (6) de contre-pression des signaux d'un indicateur d'angle (13) et/ou d'un dispositif de mesure de l'ordre d'allumage (14) et/ou d'une unité de mesure (15) pour le nombre de cylindres et/ou un dispositif tachymètre (16).

7. Montage de mesure selon une des revendications 1 à 6, caractérisé en ce qu'en cas de mesure des courants de gaz dans les machines à combustion interne dans lesquelles le montage de mesure est raccordé au reniflard d'aération du carter, l'orifice de mesure (8) est utilisable pour le réglage d'une pression différentielle de 3 à 1000 Pa et d'une contre-pression de moins de 100 Pa.

8. Montage de mesure selon une des revendications 1 à 7, caractérisé en ce qu'un support (18) d'orifices de mesure décalable par rapport au tuyau et supportant un nombre d'orifices des mesure (8), le cas échéant différents, est disposé dans le tuyau (1,2) du montage de mesure.

9. Montage de mesure selon la revendication 8, caractérisé en ce que le tuyau est composé de deux parties (1,2).

10. Montage de mesure selon la revendication 8 ou 9, caractérisé en ce que les parties du tuyau (1,2) situées en amont et en aval du support (18) d'orifices de mesure sont vérouillées réciproquement par l'intermédiare de fermetures (9).

11. Montage de mesure selon la revendication 9, caractérisé en ce que des identifications correspondant à la position du support (18) d'orifices de mesure sont pourvues sur le support (18) d'orifices de mesure et/ou sur les orifices de mesure (8), des scanners électroniques au moyen desquels les identifications palpées ou les données caractéristiques des orifices de mesure (8) sont amenées à l'unité d'évaluation (7) étant pourvues de préférence.

12. Montage de mesure selon une des revendications 1 à 11, caractérisé en ce que l'orifice de mesure (8) de conformation symétrique au moins dans la zone de l'arête vive est d'une épaisseur inégale au dehors de l'arête vive, en particulier d'une plus grande épaisseur près de la paroi du tuyau, la transition de l'arête vive aux flancs de l'orifice de mesure et/ou la transition des flancs entre les sections des différentes épaisseurs de l'orifice de mesure étant continue ou en étapes.

13. Montage de mesure selon la revendication 12, caractérisé en ce que l'orifice de mesure est placé symétriquement sur un anneau intérieur qui est supporté symétriquement par un anneau extérieur plus épais et disposé sur la paroi intérieure du tuyau, l'anneau intérieur ainsi que l'anneau extérieur étant disposés et conformés symétriquement par rapport au plan passant par l'arête vive.

14. Procédé d'équilibrage du zéro du transformateur de pression différentielle du montage de mesure selon une des revendications 5 à 13, dans lequel le transformateur (5) de pression différentielle est débranché du tuyau (1) pendant la période de l'équilibrage de son zéro, le palpeur (6) de contre-pression restant par contre relié au tuyau (1), d'une part, et à l'unité d'évaluation (7), d'autre part, de sorte que le signal de mesure pour le débit de fluide passant l'orifice de mesure (8) amené à l'unité d'évaluation (7) soit un signal de mesure assujeti à la valeur de mesure de pression du palpeur (6) de contre-pression et correspondant à une relation prédéterminée entre la pression mesurée par le palpeur (6) de contre-pression et le débit de fluide passant l'orifice de mesure (8).

15. Procédé d'équilibrage du zéro du transformateur de pression différentielle du montage de mesure selon une des revendications 5 à 13, dans lequel le transformateur (5) de pression différentielle est débranché du tuyau (1) pendant la période de l'équilibrage de son zéro, le signal de mesure pour le débit de fluide passant l'orifice de mesure (8) amené à l'unité d'évaluation (7) étant le signal de mesure du transformateur (5) de pression différentielle présent au commençement de l'équilibrage du zéro.

16. Procédé d'équilibrage du zéro du transformateur (5) de pression différentielle du montage de mesure selon une des revendications 4 à 13, dans lequel le transformateur (5) de pression différentielle est débranché du tuyau (1) pendant la période d'équilibrage, le signal de mesure pour le débit de fluide passant l'orifice de mesure (8) amené à l'unité d'évaluation (7) étant la valeur moyenne des signaux de mesure du transformateur (5) de pression différentielle obtenus au commençement de l'équilibrage du zéro et à la reprise de la mesure.

17. Orifice de mesure pour un montage de mesure des débits de courants de fluide, en particulier des courants de gaz engendrés dans les machines à combustion interne, le fluide conduit par un orifice de mesure (8) disposé dans un tuyau (1,2), l'orifice de mesure pourvu d'une arête vive (19) définissant sa chicane de débit et orientée radialement vers l'intérieur, caractérisé en ce que – surtout pour la mesure des débits des courants de fluides pulsants – l'orifice de mesure (8) est conformé symétriquement au moins dans la zone de l'arête vive (10) par rapport à un plan (12) passant par l'arête vive (10) de la chicane de débit (11) de l'orifice de mesure (8), l'angle de pressoin (α) de l'arête vive (10) étant de 110° au plus, avantageusement de 90° au plus.

18. Orifice de mesure selon la revendication 17, caractérisé en ce que l'orifice de mesure (8) est conformé symétriquement dans sa zone radialement interne par rapport à un plan (12) passant par l'arête vive (10) de la chicane de débit (11) de l'orifice de mesure (8).

19. Orifice de mesure selon la revendication 18, caractérisé en ce que l'orifice de mesure (8) est conformé symétriquement dans l'entière zone par rapport à un plan (12) passant par l'arête vive (10) de la chicane de débit (11) de l'orifice de mesure (8).

20. Orifice de mesure selon une des revendications 17 à 19, caractérisé en ce que l'angle de pression (α) de son arête vive (10) est de 70° à 110°.

21. Orifice de mesure selon une des revendications 17 à 20, caractérisé en ce qu'il est d'une épaisseur inégale, en particulier plus importante, au dehors de l'arête vive (10) près de la paroi du tuyau, la transition de l'arête vive aux flancs de l'orifice de mesure et/ou la transition des flancs entre les secteurs de différentes épaisseurs étant continue ou en étapes.

22. Orifice de mesure selon la revendicatoin 21, caractérisé en ce que l'arête vive (10) de l'orifice de mesure est placée, en particulier symmétriquement, sur un anneau intérieur qui est supporté par un anneau extérieur plus épais et disposé radialement à l'extérieur, l'anneau intérieur ainsi que l'anneau extérieur étant disposés et conformés symmétriquement par rapport au plan passant par l'arête vive.

Fig.1
1
8
2
17
8'
8''
6'
5'
5'
6
5
16
15
7
14
13

12
α
Fig.2
11
10
8'
8''
8
Fig. 3
10
8
11

Fig. 4
2
4
18
25
25'
7
5
3
9
25
25'
6'
6
1

Fig.5
4
18
9
8
4
19
9
5